# EUROPEAN PATENT SPECIFICATION

(11) **EP 2 635 954 B1**
(45) Date of publication and mention of the grant of the patent: **26.08.2020**
(21) Application number: 11834833.3
(22) Date of filing: 02.10.2011
(51) Int. Cl.: G06F 3/0488, G06F 3/0486, G06F 3/0484

(54) **NOTIFICATION GROUP TOUCH GESTURE DISMISSAL TECHNIQUES**
VERFAHREN ZUR ABLEHNUNG VON BENACHRICHTIGUNGSGRUPPEN DURCH BERÜHRUNGSGESTEN
TECHNIQUES DE REJET EN GROUPE DE NOTIFICATIONS PAR GESTE TACTILE

(30) Priority: 22.10.2010 US 910665
(43) Date of publication of application: 11.09.2013
(73) Proprietor: Microsoft Technology Licensing, LLC, Redmond, WA 98052 (US)
(72) Inventor: WORLEY, Matthew Isaac, Redmond, WA 98052-6399 (US); WONG, Tsz Yan, Redmond, WA 98052-6399 (US); OSMAN, Heiwad Hamidy, Redmond, WA 98052-6399 (US)
(74) Representative: Goddar, Heinz J.
(86) International application number: PCT/US2011/054510
(87) International publication number: WO 2012/054214

(56) References cited:
- EP-A2- 2 172 837
- US-A1- 2003 222 915
- US-A1- 2007 050 726
- US-A1- 2008 220 752
- US-A1- 2009 089 716
- US-A1- 2009 282 332
- US-A1- 2009 319 181
- US-A1- 2010 058 231
- US-B1- 7 417 650

## Description

### BACKGROUND

A computing device, such as a tablet computer may run one or more applications that generate notifications in response to the occurrence of events. These notifications are typically displayed on screen and "pop" into view in a system tray or the like. For example, a notification for an email may be displayed in a system tray in response to receipt of the email. These notifications may cover a part of the screen when they are displayed and may arrive when the user is not interested in shifting his or her attention from a current task. In a computing environment where the user has ample screen real estate, e.g., when the user has a monitor with 1920x1200 pixels and/or when the user has multiple monitors, these notifications may not interrupt the user and the user may simply wait for the notifications to be dismissed automatically, e.g., after 7 seconds, etc. On the other hand, when the computing environment is a tablet computer, e.g., a small computing device with a display resolution of, for example, 768x1024 pixels, the notification may cover real estate that is needed by the user. In the latter example, the user may want to dismiss the notification without having to interrupting his or her focus.

When the user is using an input device such as a mouse to interact with the computing device, the user may click on a small box with an "x" in the corner or the like to dismiss the notification. This technique works well for mice and styluses because the input is received at specific coordinates; however, when touch input, e.g., input from a capacitive element such as a finger, is the input mechanism the input pattern is typically spread across multiple pixels instead of concentrated on a single point. This makes it difficult for the computing device to determine whether or not the box was selected and may cause the user to shift his or her attention to the notification in order to dismiss it. This problem is only exacerbated when multiple notifications simultaneously arrive and cover a significant portion of the screen. Accordingly, techniques for easily dismissing a group of notifications with touch gestures are desirable.
EP2172837 A2 discloses a touch screen for detecting various touch events including a closed loop drawing event. When a touch (or contact) is detected at a point on the touch screen and the touch moves (e.g., drag) on the touch screen, the touch screen calculates the coordinates of the contact points and indicates that the touch is passing in real time. The touch screen then checks whether a specific coordinate is detected twice without occurrence of a touch-lift event. If a specific coordinate is detected twice, a closed loop drawing event is determined to have occurred. In this case, the touch screen transmits, to a control unit, information on the area defined by the closed loop drawing event. The control unit selects the content objects represented by the representative images (e.g. icons and/or thumbnail images) located inside and/or on the boundary line of the closed loop, and executes a command designated for the selected content objects according to a preset user configuration.
US 2003/0222915 A1 discloses representing data components by icons on a display screen and dragging an icon on the display screen into contact with another icon to thereby activate means for interactively modifying the data component represented by said dragged icon.
US 2009/0282332 A1 discloses selecting multiple items on a touchscreen using multi-touch and causing an action associated with a command to be performed with respect to the selected multiple items.

### SUMMARY

An exemplary embodiment includes a computing device. In this example, the computing device includes, but is not limited to a processor, a touch-screen, and a memory in communication with the processor when the computing device is operational. In this example, the memory can include computer readable instructions that upon execution cause the processor to display a first notification at a first position on the touch-screen and a second notification at a second position on the touch-screen; select the first notification and the second notification based on a sensed position of the first touch input; and dismiss both the first notification and the second notification in response to detecting a dismissal gesture. In addition to the foregoing, other techniques are described in the claims, the detailed description, and the figures.

Another exemplary embodiment includes a method executed by a computing device. In an example, the method can include, but is not limited to displaying a first notification and a second notification on a touch-screen, wherein the first notification and the second notification are both limited to horizontal movement on the touch screen; selecting a first notification in response to sensing first touch input at a first position indicative of the first notification; selecting the second notification in response to sensing that the first touch input moved from the first position to a second position indicative of a second notification; and dismissing both the first notification and the second notification in response to detecting a dismissal gesture. In addition to the foregoing, other techniques are described in the claims, the detailed description, and the figures.

Another exemplary embodiment includes a computer-readable storage medium. In this example, the computer-readable storage medium includes, but is not limited to, instructions that upon execution by a processor of a computing device causes the computing device to display a first notification and a second notification on the touch-screen; change a position of the first notification to overlap at least a portion of the second notification based on touch input sensed by the touch-screen; group the first notification and the second notification in response to determining that the overlapping portion is greater than the threshold; dismiss both the first notification and the second notification in response to detecting a dismissal gesture. In addition to the foregoing, other techniques are described in the claims, the detailed description, and the figures.

It can be appreciated by one of skill in the art that one or more various aspects of the disclosure may include but are not limited to circuitry and/or programming for effecting the herein-referenced aspects; the circuitry and/or programming can be virtually any combination of hardware, software, and/or firmware configured to effect the herein-referenced aspects depending upon the design choices of the system designer.

The foregoing is a summary and thus contains, by necessity, simplifications, generalizations and omissions of detail. Those skilled in the art will appreciate that the summary is illustrative only and is not intended to be in any way limiting.
The invention is set out as in independent computing device claim 1 and corresponding computer-readable storage medium claim 6. Advantageous embodiments are defined in dependent claims Embodiments that do not fall within the scope of the claims do not form part of the present invention.

### BRIEF DESCRIPTION OF THE DRAWINGS

FIG. 1 depicts a high-level block diagram of an exemplary computing device.
FIG. 2 depicts a high-level block diagram of a touch-interface of a touch-screen.
FIG. 3 depicts a high-level block diagram of an exemplary operating system 300.
FIG. 4 depicts a block diagram of computing device 100 configured to display and dismiss notifications.
FIG. 5 depicts a block diagram of computing device 100 configured to display and dismiss notifications.
FIG. 6 depicts a block diagram of computing device 100 configured to display and dismiss notifications.
FIG. 7 depicts a block diagram of computing device 100 configured to display and dismiss notifications at a first point in time.
FIG. 8 depicts a block diagram of computing device 100 configured to display and dismiss notifications at a second point in time.
FIG. 9 depicts a block diagram of computing device 100 configured to display and dismiss notifications at a third point in time.
FIG. 10 a block diagram of computing device 100 configured to display and dismiss notifications.
FIG. 11 depicts an operational procedure.
FIG. 12 depicts an alternative embodiment of the operational procedure of FIG. 11.
FIG. 13 depicts an operational procedure.
FIG. 14 depicts an alternative embodiment of the operational procedure of FIG. 13.
FIG. 15 depicts an operational procedure.
FIG. 16 depicts an alternative embodiment of the operational procedure of FIG. 15.

### DETAILED DESCRIPTION

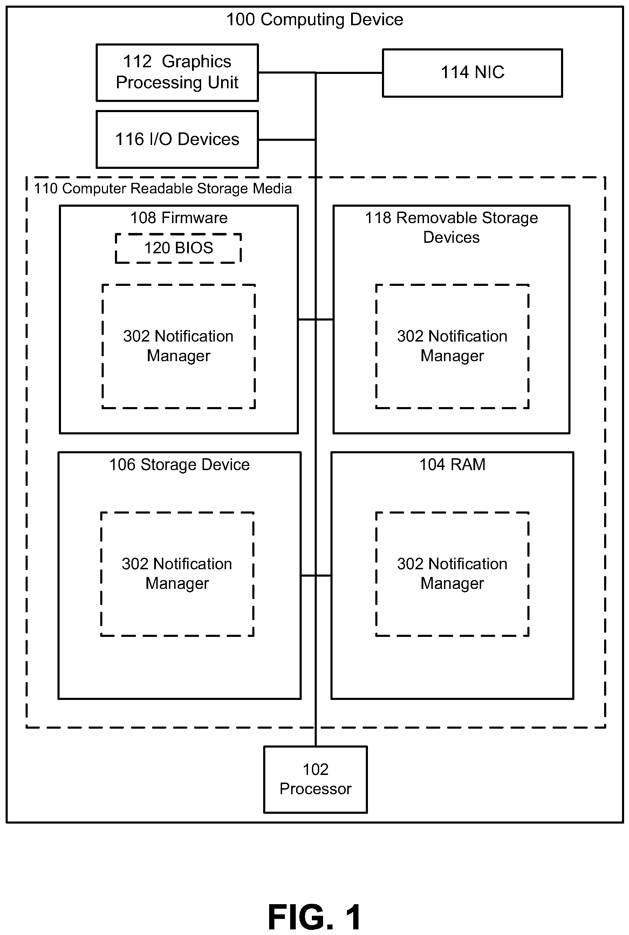

The disclosed subject matter may use a computing device such as a tablet computer. FIG. 1 and the following discussion are intended to provide a brief general description of a suitable computing environment in which the disclosed subject matter may be implemented.

The term circuitry used throughout can include hardware components such as hardware interrupt controllers, hard drives, network adaptors, graphics processors, hardware based video/audio codecs, and the firmware used to operate such hardware. The term circuitry can also include microprocessors, application specific integrated circuits, and processors, e.g., cores of a multi-core general processing unit that perform the operations of reading and executing instructions, configured by firmware and/or software. Processor(s) can be configured by instructions loaded from memory, e.g., RAM, ROM, firmware, and/or mass storage, embodying logic operable to configure the processor to perform a function(s). In an example embodiment, where circuitry includes a combination of hardware and software, an implementer may write source code embodying logic that is subsequently compiled into machine readable code that can be executed by hardware such as an application specific integrated circuit, processor, etc. Since one skilled in the art can appreciate that the state of the art has evolved to a point where there is little difference between hardware implemented functions and software implemented functions, the selection of hardware versus software to effectuate herein described functions is merely a design choice. Put another way, since one of skill in the art can appreciate that a software process can be transformed into an equivalent hardware structure, and a hardware structure can itself be transformed into an equivalent software process, the selection of a hardware implementation versus a software implementation is left to an implementer.

Referring now to FIG. 1, an exemplary computing device 100 is depicted. Computing device 100 can include processor 102, e.g., an execution core. While one processor is illustrated, in other embodiments computing device 100 may have multiple processors, e.g., multiple execution cores per processor substrate and/or multiple processor substrates that could each have multiple execution cores. As shown by the figure, various computer-readable storage media 110 can be interconnected by one or more system busses which couples various system components to the processor 102. The system buses may be any of several types of bus structures including a memory bus or memory controller, a peripheral bus, and a local bus using any of a variety of bus architectures. Computer-readable storage media 110 can include, but is not limited to, random access memory (RAM) 104, storage device 106, e.g., electromechanical hard drive, solid state hard drive, etc., firmware 108, e.g., FLASH RAM or ROM, and removable storage devices 118 such as, for example, CD-ROMs, floppy disks, DVDs, FLASH drives, external storage devices, etc. It should be appreciated by those skilled in the art that other types of computer readable storage media can be used such as magnetic cassettes, flash memory cards, and/or digital video disks. As shown by FIG. 1, notification manager 302, which is illustrated in dashed-lines, can be stored in RAM 104, storage device 106, firmware 108, and/or removable storage devices 118. Notification manager 302, can be executed by processor 102 thereby transforming computing device 100 into a machine configured to effect aspects disclosed in the following paragraphs.

The computer-readable storage media 110 can provide non volatile and volatile storage of executable instructions, data structures, program modules and other data for the computer 100 such as executable instructions. A basic input/output system (BIOS) 120, containing the basic routines that help to transfer information between elements within the computing device 100, such as during start up, can be stored in firmware 108. A number of programs may be stored on firmware 108, storage device 106, RAM 104, and/or removable storage devices 118, and executed by processor 102 including an operating system and/or application programs.

Commands and information may be received by computing device 100 through input devices 116 which can include, but are not limited to, a keyboard and pointing device. Other input devices may include a microphone, joystick, game pad, scanner or the like. These and other input devices are often connected to processor 102 through a serial port interface that is coupled to the system bus, but may be connected by other interfaces, such as a parallel port, game port, or universal serial bus (USB). A touch-screen or display device can also be connected to the system bus which can be controlled by a graphics processor unit 112 and/or processor 102.

Computing device 100 may operate in a networked environment using logical connections to one or more remote computers, such as a remote computer. The remote computer may be another computer, a server, a router, a network PC, a peer device or other common network node, and typically can include many or all of the elements described above relative to computing device 100.

When used in a LAN or WAN networking environment, computing device 100 can be connected to the LAN or WAN through network interface card 114. The NIC 114, which may be internal or external, can be connected to the system bus. In a networked environment, program modules depicted relative to the computing device 100, or portions thereof, may be stored in the remote memory storage device. It will be appreciated that the network connections described here are exemplary and other means of establishing a communications link between the computers may be used. Moreover, while it is envisioned that numerous embodiments of the present disclosure are particularly well-suited for computerized systems, nothing in this document is intended to limit the disclosure to such embodiments.

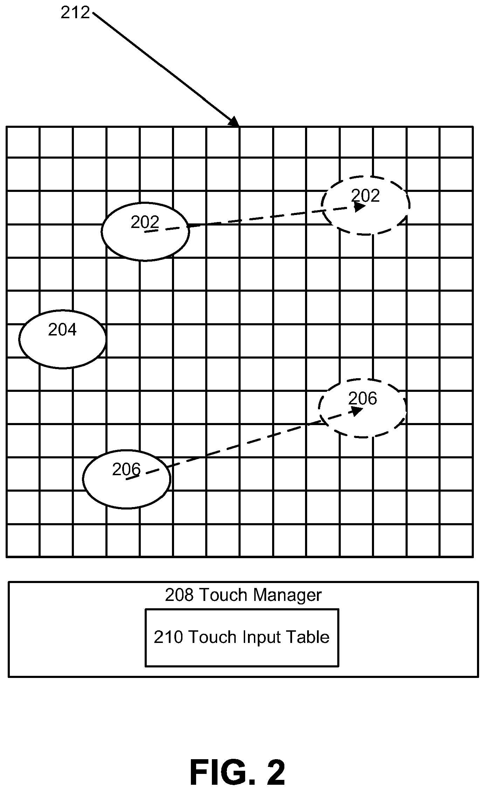

Referring now to FIG. 2, it illustrates a top-down view of exemplary touch-screen 200. Touch-screen 200 can be integrated with computing device 100 described above with respect to FIG. 1 and be used to receive user input from a user. In an exemplary configuration, touch-screen 200 can be configured to allow a user to use multiple capacitive elements, e.g., fingers, to simultaneously interface with touch-screen 200. Touch-screen 200 be formed from multiple layers such as a protective layer, a glass substrate, and a LCD display layer. Briefly, the protective layer protects touch-screen 200 from damage and the LCD display layer is configured to render images on touch-screen 200. Capacitive layer 212, which is described in more detail in the following paragraphs, can be deposited between the glass substrate and the protective layer by a bonding layer.

In an exemplary embodiment, capacitive layer 212 can be formed by a mutual capacitance system. In this example, the mutual capacitance system can comprise a grid formed from two layers of material: columns of sensing lines, which can detect current at nodes (the intersection between a row and a column) and rows of driving lines, which carry current (one skilled in the art can appreciate that the driving lines could be implemented as columns and vertical the sensing lines could be implemented as rows in alternative embodiments). In this example, capacitors can be positioned at the intersection of each node and voltage can be applied to the columns. When a finger or other capacitive element touches touch-screen 200, the line carrying the voltage comes into contact with the row, a current will flow; and a signal can be sent to touch manager 208.

In another embodiment, the capacitive layer 212 can be formed from a self capacitance system. In this example, transparent electrodes may be positioned in rows and columns so as to form a grid. When a finger of other capacitive element touches touch-screen 200 the touched electrodes measure the capacitance and generate a signal that is sent to touch manager 208.

When touch input, such as input from a finger, is sensed by touch-screen 200 a signal can be sent touch manager 208, which can determine the position of the touch input. For example, touch manager 208, which can be a module of executable instructions, can execute and analyze the signals to determine the size, shape, and location of the of the touch input. This information could be stored in touch input table 210 and associated with an identifier, e.g., touch input 202. As the user moves his or her finger across touch-screen 200, touch manager 208 receives data from the capacitive layer 212; determines which touch input the data is associated with, e.g., touch input 202, and stores coordinates associated with touch input 202 in touch input table 210. In the instance that the user removes his or her finger from touch screen 200, touch manager 208 can determine that a gesture, e.g., touch input 202 has ended.

As shown by the figure, in an exemplary embodiment touch input from multiple sources can be simultaneously tracked. For example, a user may touch touch-screen 200 with three fingers and touch manager 208 can receive at least three signals from capacitive layer 212. In this example, touch manage 208 can detect three distinct locations and determine that three touch inputs 202, 204, and 206 have been received. Touch manager 208 can be configured to store identifiers for each touch input in touch input table 210 and track how touch inputs 202, 204, and 206 change.

As a user makes a gesture with his or her fingers by moving them up and to the right touch manager 208 can track the coordinates of touch input 202, and 206 and use the data to generate one or more touch-messages, which can be sent to processes such as notification manager 302. Touch-messages can include information such as an identification of the type of event, e.g., touch-received or touch-removed, a timestamp for the event, the difference between the current location of the event and a previous location of the event, the coordinates for the event, an identifier for the touch input, etc.

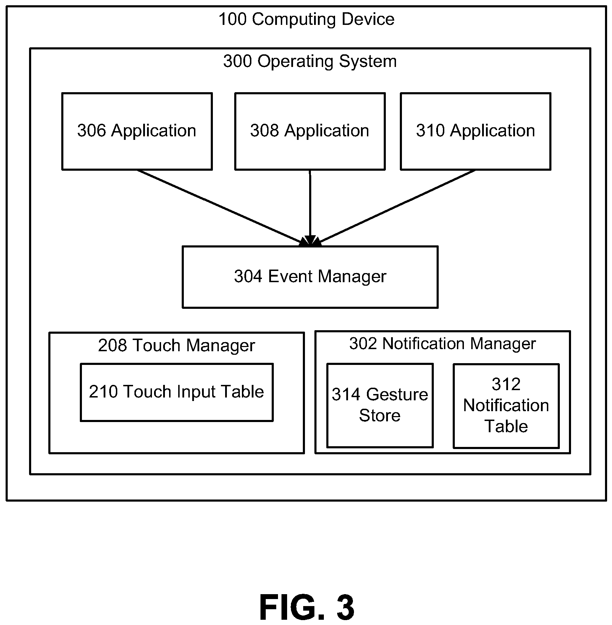

Turning now to FIG. 3, it illustrates a block-diagram of an exemplary operating system 300 that can be stored in memory of computing device 100 and executed by processor 102. As shown by FIG. 3, operating system 300 can include touch manager 208 described above with respect to FIG. 2, one or more applications 306, 308, and 310, which can be applications such as instant messenger programs, email applications, or any other program that can request a notification in response to the occurrence of an event, an event manager 304, and a notification manager 302.

The arrows flowing from applications 306-310 to event manager 304 signify that one or more applications can register with event manager 304 to have event manager 304 display notifications on touch-screen 200. After the applications register with event manager 304, event manager 304 can wait until it receives a signal indicative of an event from an application. In an exemplary embodiment, the notifications can be toast notifications. Briefly, a toast notification is a small notification that can slide into view from the bottom, top, or side of touch-screen 200. In response to the signal, event manager 304 can generate a notification, e.g., a window including text associated with the notification, and send a request to display the notification to notification manager 302.

Notification manager 302, which can be one or more modules of executable instructions, can be configured to receive requests from event manager 304; cause notifications to be rendered by touch-screen; change the position of rendered notifications; and dismiss notifications. In the following paragraphs, notification manager 302 is described as using touch input to manipulate messages; however, the disclosure is not limited to using touch and notification manager 302 can use input messages from any type input device, e.g., touch, mouse, keyboard, joystick, etc. In these alternative embodiments, notification manager 302 can be configured to process messages from these other input devices and the information contained therein, e.g., coordinates, timestamps, etc., in the same way that touch-messages are used.

Continuing with the description of FIG. 3, notification manager 302 can create an entry for the notification in notification table 312 and determine initial coordinates to display the notification in response to receiving requests to display a notification. In an exemplary embodiment, the coordinate system can be measured in units of pixels, where each pixel is described by a x and y coordinate pair. In an exemplary configuration, the x-coordinates can increase to the right and the y-coordinates can increase going from the top to the bottom. The origin (0,0) depends on the type of coordinates being used and can be the upper-left corner of touch-screen 200 in an exemplary embodiment. In this example, notification manager 302 can store the pixel pair values for the upper-left corner of the notification and the lower-right corner of the notification in notification table 312.

Notification manager 302 can be configured to select coordinates for the notifications that cause notifications to slide in from the right-side of touch-screen 200 into the lower right-hand corner of touch-screen 200 and subsequent notifications to slide in above prior notifications (one of skill in the art can appreciate that notifications can be displayed at any location by notification manager 302 and the disclosure is not limited to displaying notifications in the lower-right hand corner of touch screen 200 or having them slide in from the right). In a specific example, the notifications can be rendered so they look as if they slid into view from off-screen over the window that currently has the focus. In this specific example, the notification are visually decoupled other graphical user interface element currently displayed such that they appear to be discrete elements unassociated with other rendered images. Or put another way, the notification can be separate from any other element, e.g., task bar, application, notification folder, etc., displayed on touch-screen 200, thus appearing as if they are not attached to any other image being rendered by touch-screen 200. For example, if a desktop was being displayed the notification could slid in from the top, bottom, or side and be overlaid on top of the desktop. Similarly, if an Internet browser was open and had the current focus, the notification could slide from the top, bottom, or side and be overlaid on top of the Internet browser.

At this point, a user has a choice: the user can select the notification, wait for the notification to be automatically dismissed, or dismiss the notification him or herself. In the instance that the user wishes to dismiss the notification, the user can dismiss the notification by performing a dismissal gesture. In an exemplary embodiment, information for one or more dismissal gestures can be stored in gesture store 314 and used to determine if the user is trying to dismiss a notification.

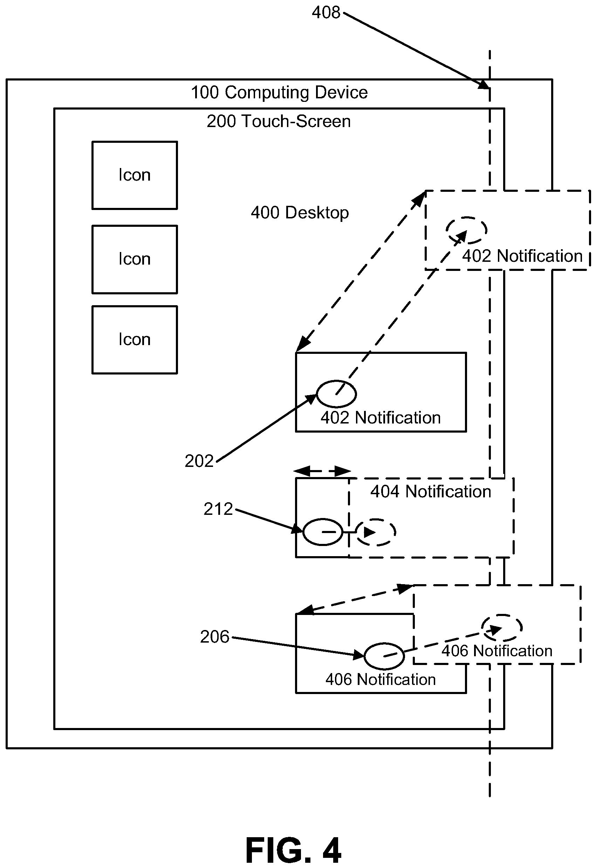

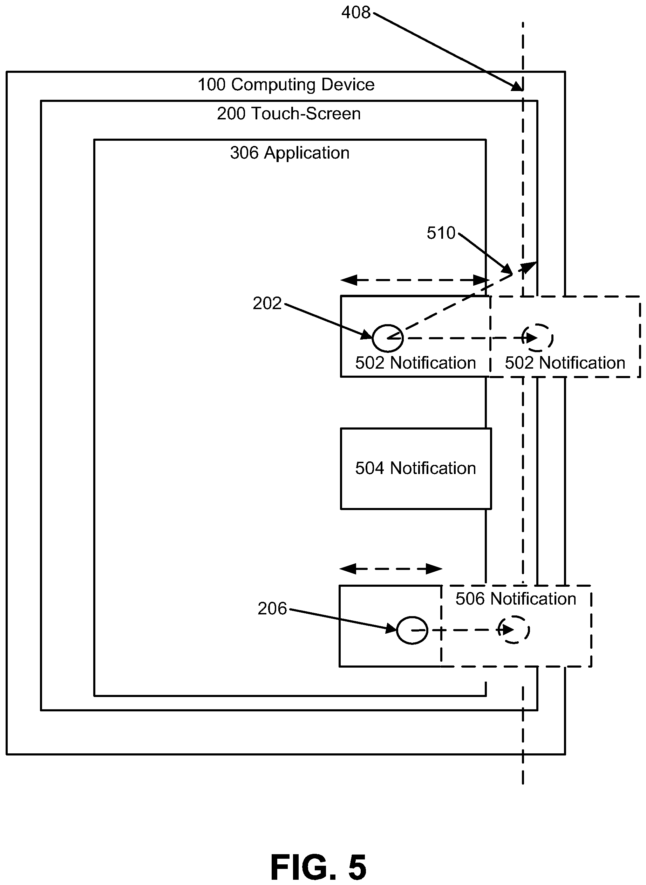

Referring to FIG. 4 and FIG. 5, these figures illustrate different dismissal gestures that could be used to dismiss gestures. Touch-screen 200 can render images indicative of, for example, desktop 400 along with icons for applications, files, etc., and one or more notifications such as notification 402, 404, and 406, which can be overlaid on top of desktop 400. FIG. 5 shows a similar environment, except that in this illustrated environment, user interface for application 306, e.g., an Internet browser, can be displayed by touch-screen 200 and the movement of notifications 502, 504, and 506, can be limited to moving along the x-axis. For example, an implementer may not want to allow users to move notifications every which way and limit movement to one dimension. Briefly, the notifications in solid lines indicate exemplary initial positions for the notifications and notifications in dashed lines illustrate how the notifications could be moved. The ovals in solid lines indicate exemplary coordinates where touch input are sensed, the dashed ovals indicate how the touch input could change over time, and the dashed arrows show the path the touch input could take.

Turning back to the description of notification manager 302, in an exemplary embodiment a dismissal gesture can be based on the location of the notification when it is released by the user. Or put another way, notification manager 302 can determine that a dismissal gesture has been performed based on the position of the notification when a touch-message is received that indicates that the associated touch-input was removed from touch-screen 200. In this example, gesture store 314 could include a threshold such as a percentage, e.g., 25%, and a boundary. In this example, notification manager 302 can use the threshold to dismiss notifications by dismissing notifications that are 25% passed a boundary such as boundary 408, which can be used to determine whether or not to dismiss notification. In this example, notification manager 302 can be configured to dismiss notifications when a threshold amount of the notification is passed boundary 408 when touch input is removed.

Boundary 408 can be a coordinate such as an x-coordinate set by an implementer. For example, boundary 408 can be the last pixel value for touch-screen 200, e.g., pixel value 768 in an embodiment where computing device has a resolution of 768x1024 and is being held so the smaller dimension is the lengthwise dimension, e.g., the orientation illustrated by FIG. 4. In other exemplary embodiments, boundary 408 can be set to be a value less than the max pixel value such as the embodiment illustrated by FIG. 4 and FIG. 5.

In this exemplary embodiment, suppose notification 402 has been moved from its initial position (the position indicated in solid lines) to the release position (the position indicated in dashed lines). In this example, notification manager 302 can calculate the amount of notification 402 that passed boundary 408 and compare the calculated value to the threshold stored in gesture store 314. In one instance, the threshold can be area based, e.g., the area of threshold that has passed boundary 408 can be calculated and compared to a threshold. In another embodiment, the threshold can be one dimensional, e.g., an x or y component can be used to calculate the amount of notification 402 that passed a boundary. For example, in the instance that boundary 408 is a horizontal boundary (such as is shown by the figure) notification manager 302 can calculate the x-component portion of notification 402 that passed boundary 408 from the x-coordinate that represents the position of the upper-left corner of notification 402, the x-coordinate that represents the position of the lower-right corner of notification 402, and boundary x-coordinate from gesture store 314. This value can then be compared to a threshold.

In the instance that the calculated amount is larger than the threshold, notification manager 302 can determine that notification 402 passed the threshold and dismiss notification 402. As shown by the dashed arrow pointing back to the initial position of notification 402, in the instance that the value is less than the threshold, notification manager 302 can cause touch-screen 200 to move notification 402 back to its initial position.

In another example embodiment, other dismissal gestures can be used to dismiss notifications. For example, a dismissal gesture can be based on the position of the touch input when the user releases his or her finger. In this example, gesture store 314 can store boundary 408 and notification manager 302 can be configured to dismiss selected gestures in the instance that touch input reached and/or passed boundary 408. In this example, suppose touch-screen 200 is rendering a series of images that show notification 406 moving along with the user's finger as he or she moves it from its initial position to the position illustrated in dashed lines in FIG. 4. In this example, when notification manager 302 receives a touch-message that indicates that the user removed his or her finger, notification manager 302 can check notification table 312 to retrieve the last coordinates of touch input 206 and compare them to boundary 408. In the instance that the x-coordinate of touch input 206 is equal to or greater than boundary 408, then notification manager 302 can dismiss selected notifications, e.g., notification 406. As shown by the dashed arrow pointing back to the initial position of notification 406, in the instance that the value is less than the threshold, notification manager 302 lookup the initial coordinates of notification 406 and can cause touch-screen 200 to render one or more images of notification 406 moving back to its initial position.

In the same or another exemplary embodiment, a dismissal gesture can use the velocity of a notification and/or or the velocity of the touch input to dismiss notifications. For example, notification manager 302 can be configured to dismiss notifications when velocity of a notification and/or the touch input is greater than a threshold velocity at the moment that touch input is removed from touch-screen 200. In this example, gesture store 314 can be configured to include a velocity threshold, e.g., a value, and a directional component that can be compared to the current velocity and direction of a notification, e.g., 402 when touch input is removed from touch-screen 200. In the instance that the current velocity of the notification is less than the threshold velocity or the velocity in the wrong direction, notification manager 302 can cause an animation to be rendered on touch-screen 200 that shows the notification returning to its initial position. In the instance that the current velocity of the notification is greater than the threshold and the velocity is in the correct direction, notification manager 302 can use the current coordinates of the notification and the vector of the notification to cause touch-screen 200 render a series of images showing the notification moving off-screen in the direction of the vector.

In exemplary embodiments, notifications can be grouped and dismissed by a user without having to individually select each notification and dismiss it. In these exemplary embodiments, touch input from a single source can be used to dismiss multiple notifications.

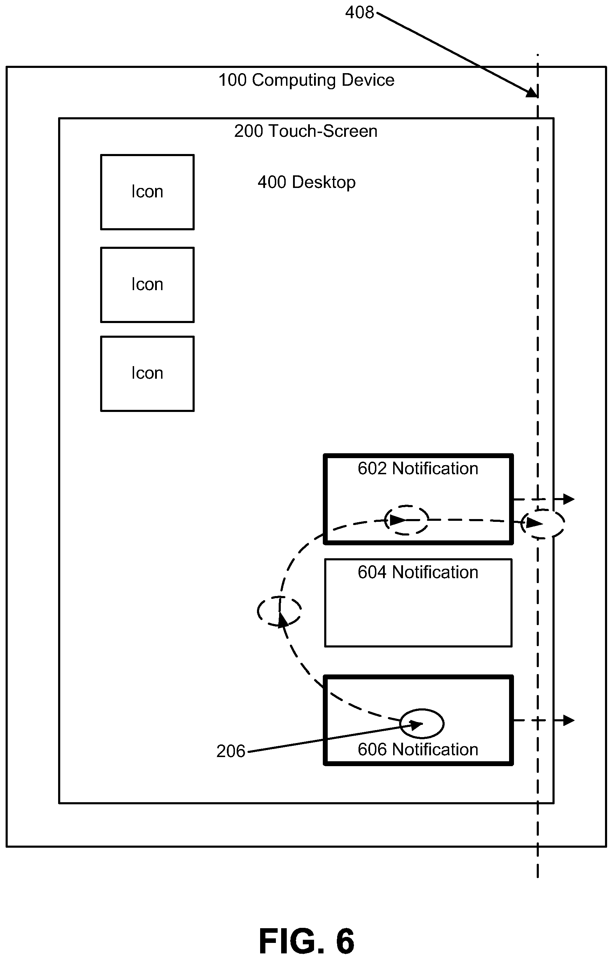

For example, and referring to FIG. 6, it shows an exemplary dismissal technique for dismissing multiple notifications with a single gesture. Similar to FIG. 4, FIG. 6 illustrates touch-screen 200 displaying, for example, desktop 400 and icons for applications, files, etc. In this example, the user may have received three notifications (602, 604, and 606) within moments of each other. In this illustrated example, the user may wish to dismiss two of the notifications (notification 606 and 602) and the user can move his or her finger through a one or more of notification he or she would like to dismiss without lifting his or her finger to dismiss the notification(s).

Put another way, notification manager 302 can receive a touch-message that indicates that touch input 206 has been received within coordinates that notification 606 occupies. Notification manager 302 can store an indication in notification table 312 that notification 606 has been selected and cause touch-screen 200 to visually indicate that notification 606 has been selected by modifying the notification's visual appearance.

Notification manager 302 can receive touch-messages that indicate that coordinates associated with touch input 206 are changing, for example, up and to the left as in the illustrated example and then receive a touch-message that indicates that touch input 206 has changed to coordinates associated with notification 602. In this example, notification manager 302 can store an indication in notification table 312 that notification 602 has also been selected by touch input 206 and cause touch-screen 200 to visually indicate that notification 602 has been selected.

After notifications 606 and 602 have been selected by the user, e.g., notification manager 302 has stored information indicating that touch input 206 has continuously moved though both notifications, the user may dismiss both notifications by performing a dismissal gesture, e.g., by moving his or her finger passed boundary 408.

In an embodiment, notification manager 302 may restrict the movement of notifications to horizontal movement. In this exemplary embodiment, when the coordinates of a touch input change vertically, notification manager 302 can keep selected notifications in place until the user performs a dismissing gesture, e.g., swipes his or her finger passed boundary 408, or until the user completes the touch-input, e.g., by removing his or her finger from touch-screen 200. Thus, in this example embodiment, when the user moves his or her finger across touch-screen 200 to select multiple notifications for dismissal, the notification manager 302 can be configured to freeze the notifications in their initial positions and visually indicate the they are selected. In this example, the positions of the notifications change when notification manager 302 dismisses them.

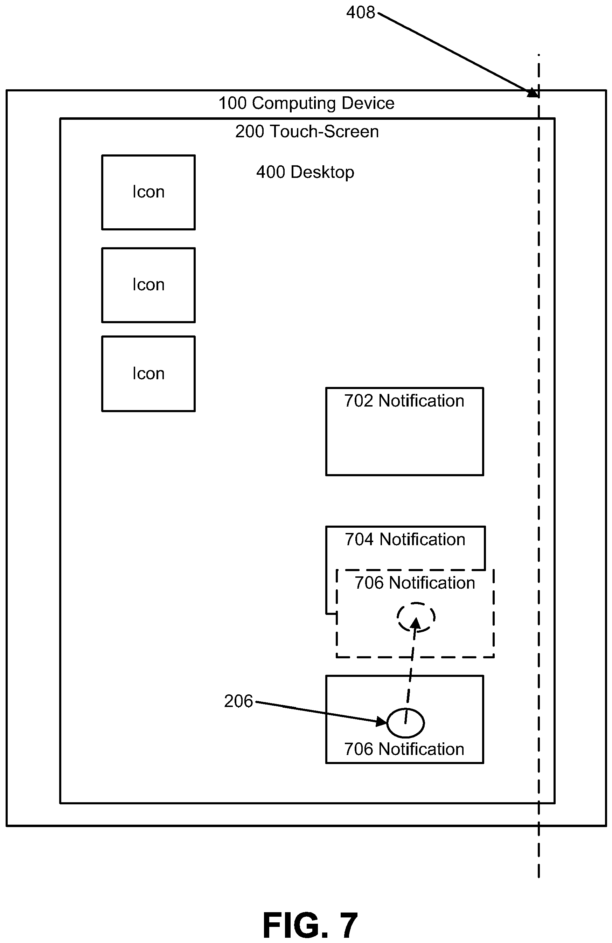

In an alternative embodiment, and referring to FIG. 7 though 9, these figures show a technique for visually grouping selected notifications prior to dismissing them at three points in time. For example, and referring to FIG. 7, it shows touch-screen 200 displaying a desktop 400 including icons and three notifications (702, 704, and 706). In this example, the user may decide to dismiss notifications 706 and 704 and touch touch-screen 200. In response, notification manager 302 can receive a touch-message including an identifier for touch source 206 and coordinates for touch source 206. Notification manager 302 can determine from the coordinates that notification 706 has been selected and store information in table 312 indicating that touch input 206 has selected notification 706. In this example, notification manager 302 may allow movement in both the x and y direction and change the position of notification 706 as the user moves his or her finger up into notification 704. That is, notification manager 302 can receive touch-messages that indicate that touch input 206 has moved up a certain number of pixels and change the position of notification 706 accordingly.

In an exemplary embodiment, notification manager 302 can use various techniques for determining that the user intends to select both notification 706 and 704. For example, notification manager 302 can use the coordinates of touch input 206 to determine whether a selection has been made. For example, when the user moves his or her finger to notification 704 to select both notifications, notification manager 302 can receive a touch-message that includes information that identifies touch input 206, indicates the number of pixels touch input 206 moved, a timestamp, and the coordinates of touch input 206. Notification manager 302 can use information that identifies the position of notification 704 and the coordinates of touch input 206 to determine that the user has selected notification 704. Notification 302 can set a bit in notification table 312 that indicates that both notification 704 and 706 have been selected by touch input 206.

In another exemplary embodiment, notification manager 302 can determine the area that notification 706 and notification 704 overlap and compare the calculated value to a threshold. In this example, if the overlapping area is greater than the threshold, notification manager 302 can group the notifications, e.g., notification 302 can set a bit in notification table 312 that indicates that both notification 704 and 706 have been selected by touch input 206. For example, notification manager 302 can receive touch-messages that identify the coordinates of touch input 206 and change the position of notification 706 by changing the position of the upper-left corner of notification 706 based on the coordinates of touch input 206. Notification manager 302 can use the coordinates for the upper-left corners of both notifications 706 and 704 and the coordinates for the lower-right corners of both notifications 706 and 704 to calculate the overlapping area; and compare the overlapping area to a threshold.

In another example embodiment, notification manager 302 can use the vertical overlap (or if the notifications were laid out differently, the horizontal overlap) to determine if notification 704 should also be selected. The vertical overlap can then be compared to a threshold and notification manager 302 can select notification 704 in the event that the vertical overlap is greater than the threshold.

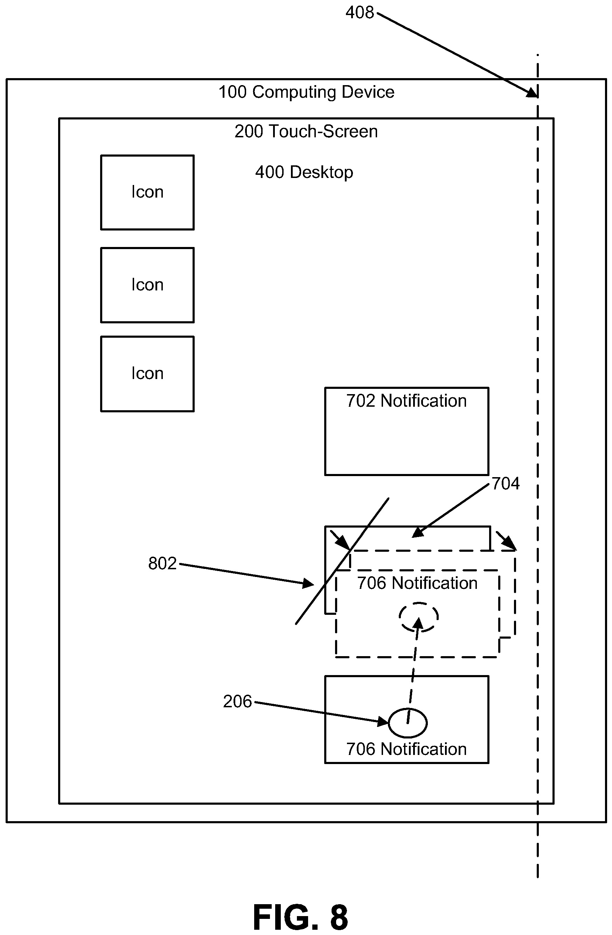

As shown by figure 8, after notification manager 302 determines to select notification 704 in addition to notification 706, notification manager 302 can cause the notifications to be visually grouped by changing the position of notification 704 to slide behind the last selected notification. For example, notification manager 302 can store a slope in gesture store 314 that can be used to determine a position for the upper-left corner of notification 704. In the illustrated example, notifications can be stacked behind the initially selected notification (notification 706 in the illustrated example) and offset up and to the right (in addition to the foregoing, the notifications could be stacked in any which way for example, the notifications could be visually grouped by offsetting them down and to the left, or just vertically.) After the notifications are grouped, notification manager 302 can store information in notification table 312 that indicates that additionally selected notifications are associated with touch input 206.

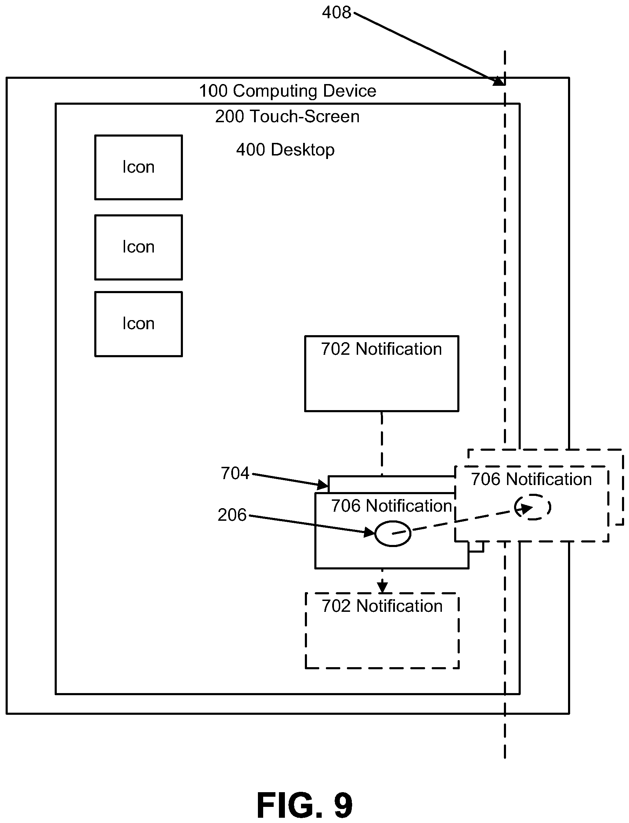

Referring now to FIG. 9, the user may decide to dismiss notifications 706 and 704 using a dismissal gesture after grouping them. As shown by the figure, touch-messages indicating that touch input 206 moved up and off-screen to the right can be received. In this example, notification manager 302 can change the position of both notifications 706 and 704 based on touch input 206 and when touch input 206 is removed, notification manager 302 can dismiss both notifications in the instance that a dismissal condition was met for the lead notification in the group using techniques described above with respect to FIG. 4 or 5.

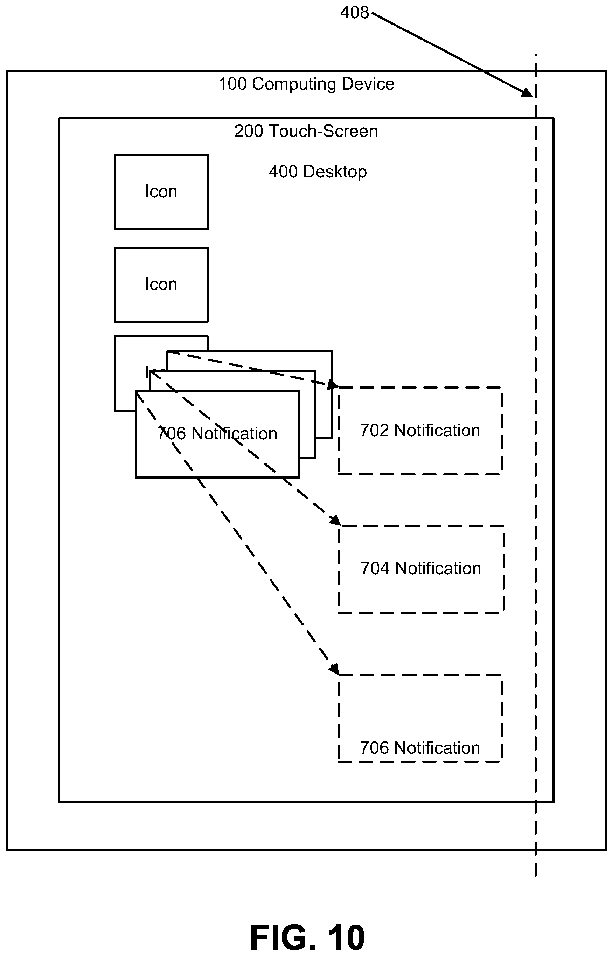

Turning briefly to FIG. 10, it illustrates an instance where the dismissal gesture was not made and a group of three notifications 702, 704, and 706 have been moved to the middle of touch-screen 200 before the user removed his or her finger. In this example, when the user removes his finger, notification manager 302 can receive a touch-message indicative of the same and determine that a dismissal gesture was not performed. Notification manager 302 can remove information indicating that the notifications were associated with touch input 206 and determine the initial coordinates of notifications 702, 704, and 706. Notification manager 302 can determine a path for each notification 702, 704, 706 that would return the notifications to their initial positions and cause touch-screen 200 to render one or more images of the notifications 702, 704, and 706 moving back to their initial positions.

The following are a series of flowcharts depicting operational procedures. For ease of understanding, the flowcharts are organized such that the initial flowcharts present implementations via an overall "big picture" viewpoint and subsequent flowcharts provide further additions and/or details that are illustrated in dashed lines.

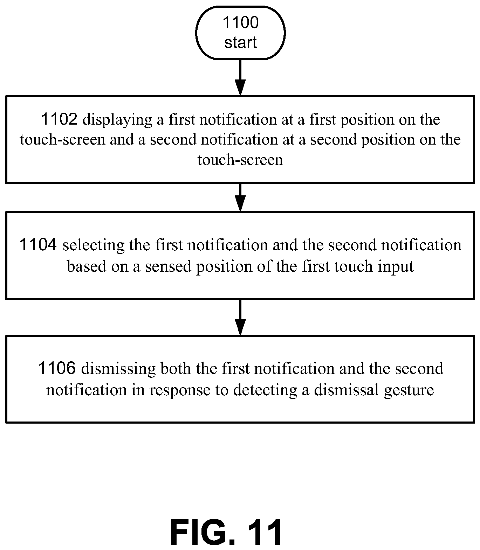

Turning now to FIG. 11, it illustrates an operational procedure for practicing aspects of the present disclosure including operations 1100, 1102, 1104, and 1106. As shown by the figure, operation 1100 begins the operational procedure and operating 1102 shows that in an embodiment computing device 100 can include circuitry for displaying a first notification at a first position on the touch-screen and a second notification at a second position on the touch-screen. For example, touch-screen 200 can be configured to display a first and a second notification. For example, computing device 100 can include touch-screen 200, which can be configured to sense touch input from, for example, a finger of a user. In this example, computing device 100 can include an event manager 304, which can be configured to receive requests to display notifications from applications such as an instant messenger client. Event manager 304 can receive requests to display notifications and communicate the same to notification manager 302, which can cause touch-screen 200 to render images indicative of at least a first and a second notification.

In a specific example, and referring to FIG. 4, in response to receiving a request to display notifications, notification manager 302 can store identifiers indicative of the notifications, e.g., notifications 402, 404, and 406, in notification table 312; and determine initial positions for the notifications, e.g., initial positions for the upper-left corners of the notifications in the lower-right corner of touch-screen 200, and send commands to operating system 300 indicative of a request to render images indicative of the notifications sliding onto touch-screen 200 from the right side to their initial positions.

Turning now to operation 1104, it shows selecting the first notification and the second notification based on a sensed position of the first touch input. Continuing with a description of the operational procedure, in an exemplary embodiment notification manager 302 can store information in notification table 312 indicating that both the first notification and the second notification have been selected by the same touch input. For example, touch input from a first source, e.g., touch input 206, can select a first notification, e.g., notification 406, and then select a second notification, e.g., notification 404, in a continuous motion.

In a specific example, first touch input can be sensed at a position on touch-screen 200 within the first notification and touch-screen 200 can send a signal to touch manager 208. Touch manager 208 can determine that this touch input is from a new source (based on a lack of prior touch input being senesced) and determine the coordinates for the touch input are within the coordinates of notification 406, e.g., x, y coordinates that are within the x, y coordinates that define the location of the first notification. Touch manager 208 can generate a touch-message including an identifier for touch input 206, a timestamp, and the coordinates for touch input 206 and send the message to notification manage 302. Notification manager 302 can receive the message and compare the coordinates for touch input 206 to coordinates of the first notification and determine that touch input 206 is within the first notification. Notification manager 302 can store information identifying that the first notification has been selected by touch input 206 in notification table 312.

The user can then drag his or her finger from a first position associated with the first notification to a second position associated with the second notification. In response to sensing touch input 206 associated with the first notification change to coordinates associated with the second notification, touch manager 208 can generate a touch-message including the identifier for touch input 206 (touch manager 208 can determine that the touch input is the first touch input from information that indicates that the user did not remove his or her finger as he or she moved it to the second position), the coordinates for the second position, a timestamp, and coordinates indicating the change between the first position and the second position. Notification manager 302 can receive the message and compare the coordinates for touch input 206 to coordinates of the second notification and determine that the second position for touch input 206 is within the second notification. Notification manager 302 can store information identifying that the second notification has been selected by touch input 206 in notification table 312.

Referring briefly to FIG. 11, operation 1106 shows dismissing both the first notification and the second notification in response to detecting a dismissal gesture. For example, notification manager 302 can dismiss both the first and second notifications in response to comparing touch input to a pattern that is associated with a dismissal gesture. For example, the user can move his or her finger in a pattern similar to those described above with respect to FIG. 4 and/or FIG. 5 and notification manager 302 can receive one or more touch-messages. Notification manager 302 can obtain dismissal parameters from gesture store 314 and determine that the user has performed a dismissal gesture. Notification manager 302 can then determine that both first and second notifications have been selected by touch input 206 from information in notification table 312 and dismiss both notifications by causing touch-screen 200 to render a series of images showing both notifications moving off-screen.

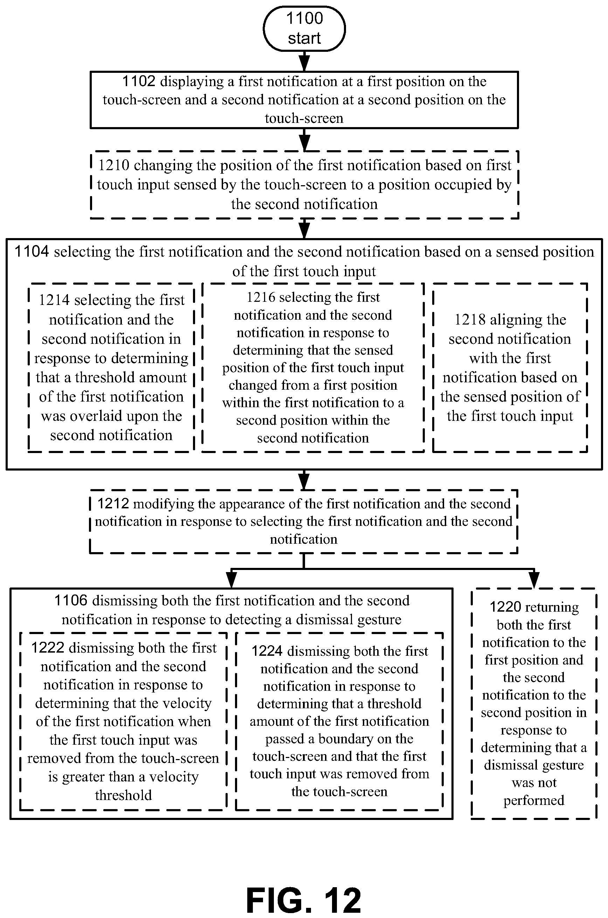

Referring now to FIG. 12, it shows an alternative embodiment of the operational procedure described in FIG. 11 including additional operations 1208-1224. Operation 1210 shows changing the position of the first notification based on first touch input sensed by the touch-screen to a position occupied by the second notification. For example, and referring to FIG. 7, in an exemplary embodiment notification manager 302 can be configured to change the position of notifications. For example, notification manager 302 can change the position of notification 706 to cover up a portion of notification 704. In this example, notification manager 302 can use the position change of touch input 206 over time to change the position of notification 706. In this example, notification 706 can be rendered by touch-screen 200 to appear as if it was being moved by touch input 206.

Continuing with the description of FIG. 12, operation 1212 shows modifying the appearance of the first notification and the second notification in response to selecting the first notification and the second notification. For example, and turning to FIG. 6, the first notification can be notification 606 and the second notification can be notification 604. In this example, notification manager 302 can change the appearance of notifications in response to determining that the notifications have been selected. For example, notification manager 302 can cause touch-screen 200 to change the color of notifications 606 and 604, change the size of notifications 606 and 604, cause notifications 606 and 604 to flash, etc. The change in appearance can signal to the user that he or she has selected both notifications.

Continuing with the description of FIG. 12, operation 1214 shows selecting the first notification and the second notification in response to determining that a threshold amount of the first notification was overlaid upon the second notification. For example, and referring to FIG. 7, touch input 206 can be used to determine how much of the first notification has been overlaid upon the second notification. The overlap can be calculated and compared to a threshold in gesture store 314. In the instance that the overlap is greater than the threshold, notification manager 302 can select the second notification. Or put another way, notification manager 302 can store information indicating that the second notification has been selected and the source of input for the second notification is the same as the source for the first notification, e.g., touch input 206.

In an exemplary embodiment, the overlap can be calculated by determining the percentage of the second notification that is covered by the first notification. For example, when notification manager 302 receives a touch-message including information describing that the user moved his or her finger, notification manager 302 can use the coordinates that identify the difference between the current position of touch input 206 and a prior to position to change the upper-left corner of notification 706 (for example, if the delta coordinates are (+10, -30) notification manager 302 can be configured to change the position of the upper-left corner of notification 706 by (+10, -30)). The new position of notification 706 can be stored in notification table 312 and notification manager 302 can use the updated coordinates of notification 706 and the coordinates for notification 704 to determine the overlap between the two notifications. The percentage can be calculated from the area and compared to a threshold in gesture store 314. In the instance that the percentage of overlap is greater than the threshold, notification manager 302 can select notification 704.

In another exemplary embodiment, the percentage of vertical overlap can be compared to a threshold to determine whether to select notifications 704. In this exemplary embodiment, when notification manager 302 receives a touch-message including information describing that the user moved his or her finger, notification manager 302 can use the coordinates that identify the difference between the current position of touch input 206 and a prior to position to change the upper-left corner of notification 706 (for example, if the delta coordinates are (+10, -30) notification manager 302 can be configured to change the position of the upper-left corner of notification 706 by (+10, -30)). The new position of notification 706 can be stored in notification table 302 and notification manager 302 can use the updated coordinates of notification 706 and the coordinates for notification 704 to determine the vertical overlap between the two notifications. For example, suppose the coordinates of the upper-left corner of notification 704 are (600, 950) and the coordinates of the lower-right corner are (700, 1000). Also suppose that the updated coordinates for notification 706 for the upper-left corner are (610, 938) and the lower-right corner are (710, 988). In this example, notification manager 302 can calculate the amount of vertical overlap (38 pixels); calculate the percentage of vertical overlap (76%); and compare the percentage to a threshold. In the instance that the percentage of overlap is greater than the threshold, notification manager 302 can group the second notification with the first notification.

Returning to FIG. 12, operation 1216 shows selecting the first notification and the second notification in response to determining that the sensed position of the first touch input changed from a first position within the first notification to a second position within the second notification. In an exemplary embodiment, notification manager 302 can be configured to select notifications in the instance that the coordinates associated with touch input 206 change to a position that is within the coordinates associated with the second notification. In the instance that touch input changes, e.g., the finger of the user is dragged, from a position within the first notification to a position within the second notification, notification manager 302 can select the second notification. Or put another way, notification manager 302 can store information indicating that the second notification has been selected and the source of input for the second notification is the same as the source for the first notification, e.g., touch input 206, in response to determining that touch input 206 changed from within the first notification to a second position that is within the bounds of the second notification.

In a specific example, and referring to FIG. 6, suppose at least two notifications have been rendered by touch-screen 200 such as notification 606 and notification 602. In this example, the user may want to dismiss these two notifications and the user may touch the image of notification 606 displayed by touch-screen 200 with his or her finger (while FIG. 6 shows notification 606 receiving input first, one of skill in the art can appreciate that the user could have touched any icon first). In response to touch input, touch manager 208 can receive a signal and determine that this is a new input source; store an identifier for touch input 206 in touch input table 210; and determine its location. In this specific example, the touch input could be touch input 206 as shown by FIG. 6. Touch manager 208 can compose a touch-message including an identifier for touch input 206; a timestamp; and the x, y coordinates and send the message to notification manager 302.

Notification manager 302 can receive the touch-message and determine that notification 606 has been selected by comparing the coordinates of touch input 206 to coordinates of notification 606. Notification manager 302 can store a bit in notification table 312 indicating that notification 606 has been selected and store information that indicates that the notification is associated with touch input 206.

The user may move his or her finger around touch-screen 200 and eventually move the finger into coordinates that notification 602 occupies. Notification manager 302 can receive a touch-message that indicates that touch input 206 has changed to a position notification 602 occupies. In response to the message, notification manager 302 can determine that notification 602 has been selected by comparing the current coordinates of touch input 206 to coordinates of notification 602. Notification manager 302 can store a bit in notification table 312 indicating that notification 602 has been selected and store information that indicates that the notification is associated with touch input 206.

Turning now to operation 1218, it shows aligning the second notification with the first notification based on the sensed position of the first touch input. For example, notification manager 302 can be configured to visually group selected notifications in a way that indicates that the notifications have been stacked.

Notification manager 302 can store a slope of a line and an offset that can be used to orientate stacked messages. In response to determining that message have been selected, notification manager 302 can use the slope and coordinates that identify the upper-left corner of the last notification that was made part of the group to determine coordinates for the upper-left corner of the notification being grouped. Notification manager 302 can change the position of the notification being grouped to the determined coordinates and cause touch-screen 200 to render one or more images of the notification sliding into the stack.

In a specific example, and turning to FIG. 8, notification manager 302 can store information that identifies a slope, such as the slope of line 802 (which is illustrated to provide a visual for explaining the disclosed techniques) and be configured to use the slope to align grouped notifications. In this example, notification manager 302 has determined to group notification 704 and notification 706. In this example, notification manager 302 can lookup the coordinates of the most recently selected notification in the group, e.g., notification 706 in this example, and use the slope and the offset to calculate coordinates for a new position of the upper-left corner of notification 704. Notification manager 302 can determine the coordinates and change the position of notification 704 accordingly. For example, notification manager 302 can cause touch-screen 200 to render a series of images showing notification 704 moving to the new coordinates behind notification 706.

In an alternative embodiment, notification manager 302 can replace the images of notifications in the group with a graphic that indicates that multiple notifications have been stacked. In this example, when notification manager 302 determines that message have been selected, notification manager 302 can cause a new graphic showing grouped notifications to be loaded from memory and rendered by touch-screen 200.

Continuing with the description of FIG. 12, operation 1220 shows returning both the first notification to the first position and the second notification to the second position in response to determining that a dismissal gesture was not performed. For example, in an exemplary embodiment, a user may move notifications around touch-screen 200 and then fail to perform a dismissal gesture. For example, the user may have dragged visually grouped notifications to the center of desktop 400 and then removed his or her finger from touch-screen 200. In response, notification manager 302 can be configured to cause touch-screen 200 render one or more images that show the selected notifications moving back to initial positions.

In a specific example, and referring to FIG. 10, in response to removing his or her finger from touch-screen 200, capacitive layer 212 in touch-screen 200 can stop sending signals to touch manager 208, which can use this lack of information to determine that touch input 206 was removed from touch-screen 200. Touch manager 208 can generate a touch-message that includes an indication that touch input 206 has stopped and a timestamp and send the touch-message to notification manager 302. In this example, notification manager 302 can determine that a dismissal gesture was not performed, e.g., the release velocity was too low and/or the direction of movement was incorrect, and/or the group (or a portion thereof) was not moved passed boundary 408. In this example, notification manager 302 can determine from information stored in notification table that notifications 1002, 1004, and 1006 were associated with touch input 206 and obtain coordinates indicative of the initial positions of the upper-left corners of these notifications. Notification manager 302 can then determine a path for each notification that will take it from its current position to its initial position and cause touch-screen 200 to render one or more images that show notifications 1002, 1004 and 1006 moving back to their initial positions.

Continuing with the description of FIG. 12, operation 1222 shows dismissing both the first notification and the second notification in response to determining that the velocity of the first notification when the first touch input was removed from the touch-screen is greater than a velocity threshold. In an exemplary embodiment, the release velocity of the first notification can be used to determine if a dismissal gesture was performed. For example, gesture store 314 can include a release velocity threshold. In this example, when touch input is removed from touch-screen 200, notification manager 302 can determine the velocity of, for example, the first notification and compare the velocity of the notification to a threshold. In the instance that the velocity of the first notification is greater than the velocity threshold, notification manager 302 can be configured to dismiss selected notifications associated with this touch input. For example, notification manager 302 can determine a path for the notifications that would move the notifications off-screen, e.g., off the right side of touch-screen 200, and cause touch-screen 200 to render one or more images showing notifications in the group moving off-screen according to the path.

In a specific example, and referring to FIG. 9, notifications 706 and 704 may be selected and the user may move his or her finger towards the right edge of touch-screen 200. The user may make a "flicking motion," e.g., the user may make a quick drag gesture in the direction off-screen 200, and remove his or her finger from touch-screen 200. In response, touch-manager 208 can receive one or more signals from capacitive layer 212 of touch-screen 200 indicating that touch input 206 made a quick motion and then ended. Touch-manager 208 can process this information and generate one or more touch-messages and send them to touch manager 302. Touch manager 302 can determine the velocity of notification 706 from the velocity of the gesture. For example, the velocity of the gesture can be determined by using the change in position between two points, e.g., from coordinates associated with the last two touch-messages for touch input 206, and timestamps. Notification manager 302 can compare the calculated velocity to the threshold and determine if the calculated velocity is higher. In the instance it is higher, notification manager 302 can dismiss gestures associated with touch input 206.

Referring back to FIG. 12, it also illustrates operation 1224, which shows dismissing both the first notification and the second notification in response to determining that a threshold amount of the first notification passed a boundary on the touch-screen and that the first touch input was removed from the touch-screen. In an exemplary embodiment, the amount of the first notification that has been moved off-screen can be used to determine if a dismissal gesture was performed. For example, gesture store 314 can include a value indicative of the amount of a notification as a dismissal threshold. In this example, when touch input is removed from touch-screen 200, notification manager 302 can determine how much of the first notification has been moved off-screen and compare the amount to the threshold. In the instance that the amount of the first notification that is off-screen is greater than the threshold, then notification manager 302 can be configured to dismiss selected notifications associated with this touch input. For example, notification manager 302 can determine a path for the notifications that would move the notifications off-screen, e.g., off the right side of touch-screen 200, and cause touch-screen 200 to render one or more images showing notifications in the group moving off-screen according to the path.

In a specific example, and referring to FIG. 9, suppose that the user has grouped notifications 706 and 704 and notification manager 302 has changed the position of notification 706 to move a part of it off-screen. That is, touch-messages indicating that touch input 206 has moved to the right can be received by notification manager 302, which can cause touch-screen 200 to change the position of the group to make it appear to move to the right. In this example, the user may release notification 706 and a touch-message can be received by notification manager 302 that indicates that touch input 206 has been removed. Notification manager 302 can deselect both notifications and compare that the part of notification 706 that has moved off-screen to a threshold. In response to this determination, notification manager 302 can cause touch-screen 200 to dismiss notifications 706 and 704.

In an exemplary embodiment, the threshold can be based on the area of the notification, the horizontal off-screen component, or the vertical off-screen component. For example, in an embodiment where area is used, notification manager 302 can be configured to determine the area of the first notification that is off-screen using information that describes the amount of pixels in the touch-screen 200, the coordinates of the upper-left corner of the first notification and the lower-right corner when touch input 206 was removed.

In another embodiment, the horizontal off-screen portion can be used. For example, the horizontal component of the coordinates that identify the position of the first notification, e.g., the coordinates associated with the upper-left corner and the lower-right corner, and the x-coordinate identifying the last pixel for touch-screen 200, e.g., boundary 408 could be the last pixel value 768 (in an embodiment where touch-screen has 768x1024 pixels) in this exemplary embodiment.

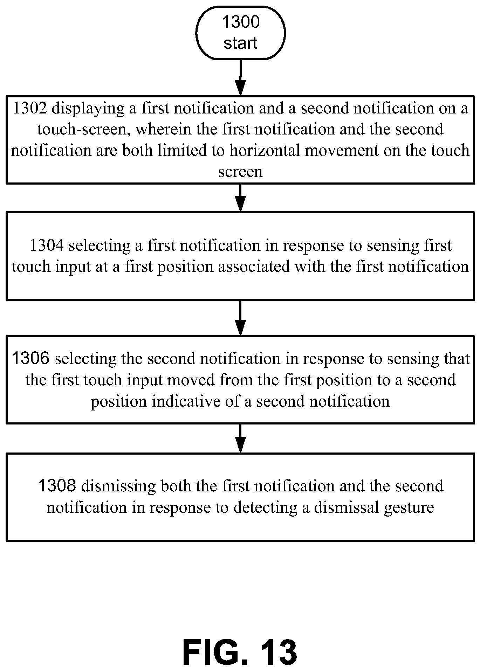

Turning now to FIG. 13, it shows an operational procedure for practicing aspects of the present disclosure including operations 1300, 1302, 1304, 1306, and 1308. Operation 1300 begins the operational procedure and operation 1302 shows displaying a first notification and a second notification on a touch-screen, wherein the first notification and the second notification are both limited to horizontal movement on the touch screen. For example, touch-screen 200 can be configured to display a first and a second notification. In this example, notification manager 302 can restrict the movement of the displayed notifications to the horizontal direction (in this example, notification manager 302 may allow basic movement in the vertical direction, e.g., notification manager 302 could allow 5 percent vertical movement to reinforce the idea that notifications can be moved, but just not vertically.) Computing device 100 can include touch-screen 200, which can be configured to sense touch input from, for example, a finger of a user. In this example, computing device 100 can include an event manager 304, which can be configured to receive requests to display notifications from applications such as an instant messenger client, an email client, a stock broker ticker, a real simple syndication (RSS feed), etc. Event manager 304 can receive requests to display notifications and communicate the same to notification manager 302, which can cause touch-screen 200 to render images indicative of at least a first and a second notification on touch-screen 200. Put another way, notification manager 302 can store identifiers indicative of the notifications in notification table 312; determine initial positions for the notifications, e.g., initial positions for the upper-left corners of the notifications in the lower-right corner of touch-screen 200; and send commands to operating system 300 indicative of request to render images indicative of the notifications sliding onto touch-screen 200 from the right side to their initial positions.

Continuing with the description of FIG. 13, operation 1304 shows selecting a first notification in response to sensing first touch input at a first position indicative of the first notification. In an exemplary embodiment, notification manager 302 can store information in notification table 312 indicating that the first notification has been selected. For example, notification manager 302 can receive a touch-message that includes coordinates from a first touch input, e.g., touch input 206, and determine that the coordinates are within coordinates associated with the first notification.

In a specific example, first touch input can be sensed at a position on touch-screen 200 within the first notification and touch-screen 200 can send a signal to touch manager 208. Touch manager 208 can determine that this touch input is from a new source (based on a lack of prior touch input being senesced) and determine the coordinates for the touch input, e.g., x, y coordinates that are within the x, y coordinates that define the initial location of the first notification. Touch manager 208 can generate a touch-message including an identifier for touch input 206, a timestamp, and the coordinates for touch input 206 and send the message to notification manage 302. Notification manager 302 can receive the message and compare the coordinates for touch input 206 to coordinates of the first notification and determine that touch input 206 is within the first notification. Notification manager 302 can store information identifying that the first notification has been selected and information that identifies the touch input 206 in notification table 312.

Continuing with the description of FIG. 13, operation 1306 shows selecting the second notification in response to sensing that the first touch input moved from the first position to a second position indicative of a second notification. For example, and continuing the example from the previous paragraph, notification manager 302 can store information in notification table 312 indicating that touch input 206 has moved to coordinates associated with the second notification and notification manager 302 can select the second notification. For example, notification manager 302 can receive a touch-messages that include coordinates from a first touch input, e.g., touch input 206, and determine that the coordinates are within coordinates associated with the second notification.

In a specific example, a user can have previously selected the first notification and then dragged his or her finger from a first position associated with the first notification to a second position associated with the second notification. In response to sensing touch input associated with the first notification changing to coordinates associated with the second notification, touch manager 208 can generate a touch-message including the identifier for touch input 206 (touch manager 208 can determine that the touch input is the touch input 206 from information that indicates that the user did not remove his or her finger as he or she moved it to the second position), the coordinates for the second position, a timestamp, and coordinates indicating the change between the first position and the second position. Notification manager 302 can receive the message and compare the coordinates for touch input 206 to coordinates of the second notification and determine that the second position for touch input 206 is within the second notification. Notification manager 302 can store information identifying that the second notification has been selected and information that identifies touch input 206 in notification table 312.

Operation 1308 shows dismissing both the first notification and the second notification in response to detecting a dismissal gesture. For example, notification manager 302 can dismiss both the first and second notifications in response to comparing touch input to information that defines a dismissal gesture. For example, the user can move his or her finger in a pattern similar to those described above with respect to FIG. 4 and/or FIG. 5 and notification manager 302 can receive one or more touch-messages. Notification manager 302 can determine how touch input 206 changed according to the information in the touch-messages and determine that a dismissal gesture was performed. In response to detecting a dismissal gesture, notification manager 302 can determine that both first and second notifications have been selected by touch input 206 from information in notification table 312 and dismiss both notifications by causing touch-screen 200 to render a series of images showing both notifications moving off-screen.

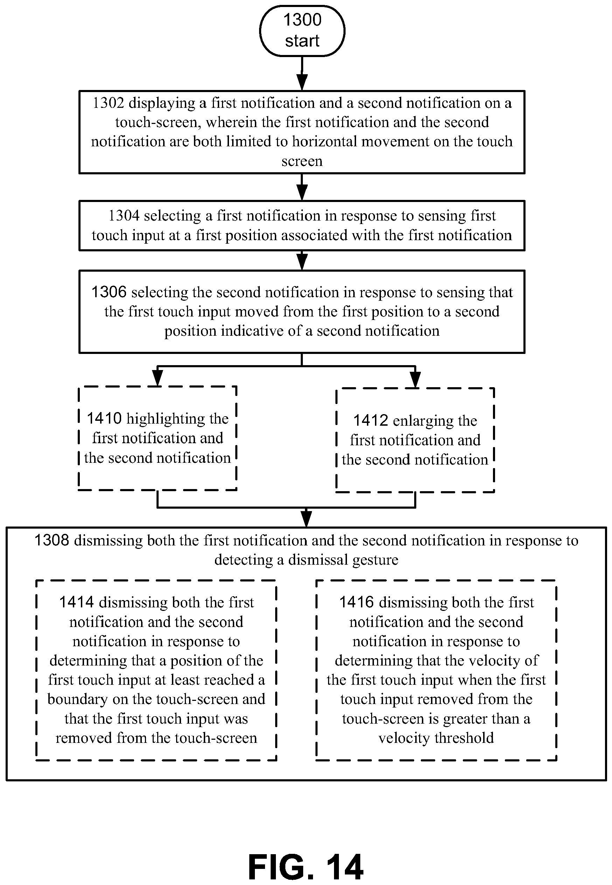

Turning now to FIG. 14, it illustrates alternative operations that can be performed in conjunction with those illustrated by FIG. 13. Operation 1410 shows highlighting the first notification and the second notification. For example, and turning to FIG. 6, notification manager 302 can be configured to change the appearance of selected notifications by highlighting, e.g., strongly illuminating, notifications that have been selected. For example, and referring to FIG. 6, notification manager 302 can cause touch-screen 200 to emphasize notifications 606 and 604, in response to selecting the notifications. For example, notification manager 302 can change the color of notifications 606 and 604.

Continuing with the description of FIG. 14, operation 1412 shows enlarging the first notification and the second notification. For example, and turning to FIG. 6, notification manager 302 can be configured to change the size of selected notifications to emphasize that the notifications have been selected. Notification manager 302 in this example can be configured to change the size of notification 606 by, for example, four percent. In this example, notification manager 302 can use coordinate information for the upper-left corner and lower-right corner of notification 606 to determine new coordinates for an enlarged notification. Notification manager 302 can then send a signal to operation system 300 instructing it to change the size of notification 606. Operating system 300 can then cause touch-screen 200 to render an enlarged image on touch-screen 200.

Touch input 206 can then be detected within coordinates that are associated with notification 604. In this example, notification manager 302 can store a bit in notification table 312 indicating that the notification has been selected and change the size of notification 604 by four percent. Notification manager 302 can then send a signal to operation system 300 instructing it to change the size of notification 604. Operating system 300 can then cause touch-screen 200 to render an enlarged image indicative of notification 604 on touch-screen 200.

Referring back to FIG. 14, operation 1414 shows dismissing both the first notification and the second notification in response to determining that a position of the first touch input at least reached a boundary on the touch-screen and that the first touch input was removed from the touch-screen. For example, notification manager 302 can be configured to dismiss notifications in the instance that touch input associated with the notifications was sensed at or passed a boundary of touch-screen 200 when the touch input was removed his or her finger from touch-screen 200.

For example, and referring to FIG. 6, notification manager 302 may have stored information in notification table 312 that indicates that both notifications 602 and 606 have been selected by touch input 206. For example, the user may have dragged his or her finger across coordinates of touch-screen 200 that were associated with notification 606 and 602 as shown by FIG. 6. In this example, the user may move his or her finger to boundary 408, which could be set to the last pixel for touch-screen 200, e.g., pixel value 768 (in an embodiment where touch-screen has 768x1024 pixels), or to an x-coordinate before the edge, e.g., pixel value 758, etc. The user may then remove his or her finger from touch-screen 200 and notification manager 302 may receive a touch-message that indicates that touch input 206 has been removed from touch-screen 200. In this example, notification manager 302 can access table 312 and obtain coordinates for touch input 206 from a prior sample and determine that the x-coordinate of touch input 206 is equal to or greater than the x-coordinate of boundary 408, which could be obtained from gesture store 314. In response to this determination, notification manager 302 can check notification table 312 to determine if any notifications were associated with touch input 206. Notification manager 302 can determine that notifications 602 and 606 were associated with touch input 206 and dismiss them by causing touch-screen 200 to render an animation of notifications 602 and 606 moving off-screen.

Referring now to operation 1416, it shows dismissing both the first notification and the second notification in response to determining that the velocity of the first touch input when the first touch input removed from the touch-screen is greater than a velocity threshold. In an exemplary embodiment, the release velocity of the first notification can be used to determine if a dismissal gesture was performed. For example, gesture store 314 can include a release velocity threshold. In this example, when touch input is removed from touch-screen 200, notification manager 302 can determine the velocity of touch input 206 and compare the velocity of touch input 206 to a threshold. In the instance that the velocity is greater than the velocity threshold, notification manager 302 can be configured to dismiss the selected notifications associated with touch input 206. For example, notification manager 302 can determine a path for the notifications that would move the notifications off-screen, e.g., off the right side of touch-screen 200, and cause touch-screen 200 to render one or more images showing notifications in the group moving off-screen according to the path.

In a specific example, and referring to FIG. 6, notifications 606 and 602 may be selected and the user may move his or her finger towards the right edge of touch-screen 200 making a "flicking motion," and remove his or her finger from touch-screen 200. In response, touch-manager 208 can receive one or more signals from capacitive layer 212 of touch-screen 200 indicating that touch input 206 made a quick motion and then ended. Touch-manager 208 can process this information and generate one or more touch-messages and send them to touch manager 302. Touch manager 302 can determine the velocity of touch input 206 by using the change in position between two points, e.g., from coordinates associated with the last two touch-messages for touch input 206, and timestamps. Notification manager 302 can compare the calculated velocity to the threshold and determine if the calculated velocity is higher. In the instance it is higher, notification manager 302 can dismiss notifications associated with touch input 206.

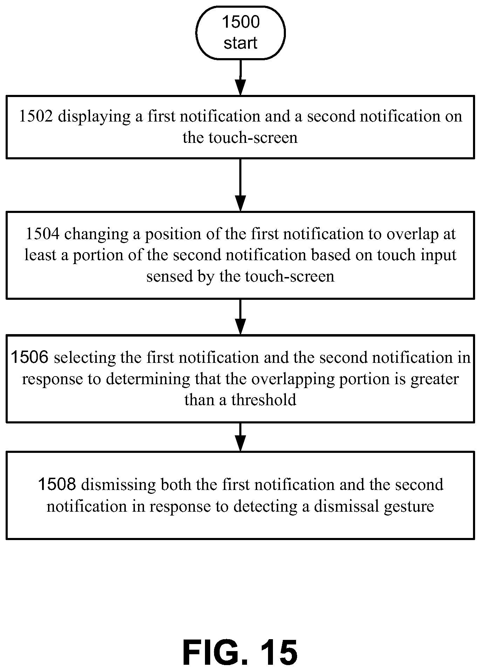

Turning now to FIG. 15, it shows an operational procedure for practicing aspects of the present disclosure including the operations 1500, 1502, 1504, and 1506. As shown by the figure, operation 1500 begins the operational procedure and operation 1502 shows displaying a first notification and a second notification on the touch-screen. For example, touch-screen 200 can be configured to display a first and a second notification. For example, computing device 100 can include touch-screen 200, which can be configured to sense touch input from, for example, a finger of a user. In this example, computing device 100 can include an event manager 304, which can be configured to receive requests to display notifications from applications such as an instant messenger client. Event manager 304 can receive requests to display notifications and communicate the same to notification manager 302, which can cause touch-screen 200 to render images indicative of at least a first and a second notification on touch-screen 200.

Continuing with the description of FIG. 15, operation 1504 shows changing a position of the first notification to overlap at least a portion of the second notification based on touch input sensed by the touch-screen. For example, and referring to FIG. 7, in an exemplary embodiment notification manager 302 can be configured to change the position of the first notification based on touch input, e.g., touch input 206. For example, notification manager 302 can change the position of notification 706 to overlap a portion of notification 704 based on information it receives from touch-messages. For example, a touch-message could be received that includes an identifier for touch input 206 and coordinates. In this example, touch manager 302 can be configured to calculate the difference in coordinates between the coordinates in this touch-message and coordinates in a previous touch-message. Notification manager 302 can then be configured to update the coordinates for the upper-left corner of notification 706 based on the calculated difference. Notification manager 302 can then cause touch-screen 200 to render an image indicative of notification 706 at the updated coordinates. In this example, touch-screen 200 can render notification 706 in a way that makes notification 706 appear to be on top of a portion of notification 704.

Turning to operation 1506, it shows select the first notification and the second notification in response to determining that the overlapping portion is greater than a threshold. For example, and referring to FIG. 7, in an exemplary embodiment, touch input 206 can be used to determine how much of the first notification has been overlaid upon the second notification. The overlap can be calculated and compared to a threshold in gesture store 314. In the instance that the overlap is greater than the threshold, notification manager 302 can group the second notification with the first notification. Or put another way, notification manager 302 can store information indicating that the second notification has been selected and the source of input for the second notification is the same as the source for the first notification, e.g., touch input 206.

Continuing with the description of FIG. 15, operation 1508 shows dismissing both the first notification and the second notification in response to detecting a dismissal gesture. For example, notification manager 302 can dismiss both the first and second notifications in response to comparing touch input to information that defines a dismissal gesture stored in gesture store 314. For example, the user can move his or her finger in a pattern similar to those described above with respect to FIG. 4 and/or FIG. 5 and notification manager 302 can receive one or more touch-messages. Notification manager 302 can determine how touch input 206 changed according to the information in the touch-messages and determine that a dismissal gesture was performed. In response to detecting a dismissal gesture, notification manager 302 can check notification table 312 to determine if any notifications are associated with touch input 206; determine that both first and second notifications have been selected by touch input 206; and determine paths for the notifications that would move the notifications off-screen, e.g., off the right side of touch-screen 200, and cause touch-screen 200 to render one or more images showing notifications in the group moving off-screen according to the path.

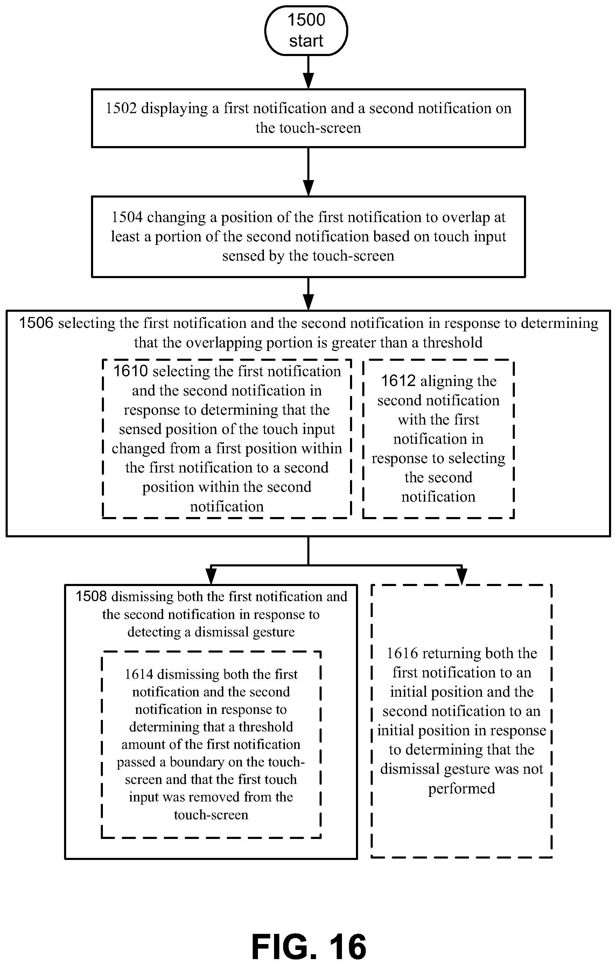

Turning now to FIG. 16, it shows additional operations (operations 1610-1616) that can be executed in conjunction with the operations illustrated by FIG. 15. Turning to operation 1610, it shows selecting the first notification and the second notification in response to determining that the sensed position of the touch input changed from a first position within the first notification to a second position within the second notification In an exemplary embodiment, notification manager 302 can be configured to select notifications in the instance that the coordinates associated with touch input 206 change to a position that is within the coordinates associated with the second notification. In the instance that touch input changes, e.g., the finger of the user is dragged from one position to another, from a position within the first notification to a position within the second notification, notification manager 302 can select the second notification. Or put another way, notification manager 302 can store information indicating that the second notification has been selected and the source of input for the second notification is the same as the source for the first notification, e.g., touch input 206, in response to determining that touch input from the same source was tracked from an initial position from within the first notification to a second position that is within the bounds of the second notification.

Continuing with the description of FIG. 16, operation 1612 shows aligning the second notification with the first notification in response to selecting the second notification. For example, notification manager 302 can be configured to visually group selected notifications.

For example, notification manager 302 can store a slope of a line and an offset that can be used to orientate stacked messages. In response to determining that multiple message have been selected, notification manager 302 can use the slope and coordinates that identify the upper-left corner of the last notification that was made part of the group to determine coordinates for the upper-left corner of the notification being grouped. Notification manager 302 can change the position of the notification being selected to the determined coordinates and cause touch-screen 200 to render one or more images of the notification sliding into the stack.

Turning to operation 1614, it shows dismissing both the first notification and the second notification in response to determining that a threshold amount of the first notification passed a boundary on the touch-screen and that the first touch input was removed from the touch-screen. In an exemplary embodiment, the amount of the first notification that has been moved off-screen can be used to determine if a dismissal gesture was performed. For example, gesture store 314 can include a value indicative of the amount of a notification as a dismissal threshold. In this example, when touch input is removed from touch-screen 200, notification manager 302 can determine how much of the first notification has been moved off-screen and compare the amount to the threshold. In the instance that the amount of the first notification that is off-screen is greater than the threshold, then notification manager 302 can be configured to dismiss the selected notifications associated with the touch input. For example, notification manager 302 can determine a path for the notifications that would move the notifications off-screen, e.g., off the right side of touch-screen 200, and cause touch-screen 200 to render one or more images showing notifications in the group moving off-screen according to the path.

FIG. 16 also shows operation 1616, which illustrates returning both the first notification to an initial position and the second notification to an initial position in response to determining that the dismissal gesture was not performed. For example, in an exemplary embodiment, a user may move notifications around touch-screen 200 and then fail to perform a dismissal gesture. For example, the user may have dragged the grouped notifications to the center of desktop 400 and then removed his or her finger from touch-screen 200. In response, notification manager 302 can be configured to cause touch-screen 200 render one or more images that show the grouped notifications moving back to initial positions.

In a specific example, and referring to FIG. 10, in response to removing his or her finger from touch-screen 200, capacitive layer 212 in touch-screen 200 can stop sending signals to touch manager 208, which can use this lack of information to determine that touch input 206 was removed from touch-screen 200. Touch manager 208 can generate a touch-message that includes an indication that touch input 206 has stopped and a timestamp and send the touch-message to notification manager 302. In this example, notification manager 302 can determine that a dismissal gesture was not performed, e.g., the release velocity was too low and/or the direction of movement was incorrect, and/or the group (or a portion thereof) was not moved passed boundary 408. In this example, notification manager 302 can determine from information stored in notification table 312 that notifications 1002, 1004, and 1006 were associated with touch input 206 and obtain coordinates indicative of the initial positions of the upper-left corners of these notifications. Notification manager 302 can then determine a path for each notification that will take it from its current position to its initial position and cause touch-screen 200 to render one or more images that show notifications 1002, 1004 and 1006 moving back to their initial positions.

The foregoing detailed description has set forth various embodiments of the systems and/or processes via examples and/or operational diagrams. Insofar as such block diagrams, and/or examples contain one or more functions and/or operations, it will be understood by those within the art that each function and/or operation within such block diagrams, or examples can be implemented, individually and/or collectively, by a wide range of hardware, software, firmware, or virtually any combination thereof.

## Claims

1. A computing device (100), comprising:
a processor (102);
a touch-screen (200); and
a memory (110) in operable communication with the processor and the touch-screen (200), the memory (110) including instructions that upon execution by the processor cause the processor to:
display (1102) a first notification at a first position on the touch-screen and a second notification at a second position on the touch-screen;
change (1210) a position of the first notification to overlap at least a portion of the second notification based on touch input sensed by the touch-screen;
select (1210, 1214) the first notification and the second notification based on a sensed position of a first touch input, namely, in response to determining that a threshold amount of the first notification was overlaid upon the second notification; and
dismiss (1106) both the first notification and the second notification in response to detecting a dismissal gesture.

2. The computing device (100) of claim 1, wherein the memory (110) further comprises instructions upon execution cause the processor (102) to:
Modify (1212) the appearance of the first notification and the second notification in response to selecting the first notification and the second notification.

3. The computing device (100) of claim 1, wherein the instructions that upon execution cause the processor (102) to select the first notification and the second notification further comprise instructions that upon execution cause the processor (102) to:
align the second notification with the first notification based on the sensed position of the first touch input.

4. The computing device (100) of claim 1, wherein the memory (110) further comprises instructions that upon execution cause the processor to:
return both the first notification to the first position and the second notification to the second position in response to determining that a dismissal gesture was not performed.

5. The computing device (100) of claim 1, wherein the instructions that upon execution cause the processor (102) to dismiss both the first notification and the second notification further comprise instructions that upon execution cause the processor (102) to:
Dismiss (1222) both the first notification and the second notification in response to determining that the velocity of the first notification when the first touch input was removed from the touch-screen is greater than a velocity threshold.

6. A computer-readable storage medium (110) including instructions for dismissing notifications displayed by a touch-screen, the computer-readable storage medium including instructions that upon execution cause a processor to:
display (1102) a first notification and a second notification on the touch-screen;
change (1210) a position of the first notification to overlap at least a portion of the second notification based on touch input sensed by the touch-screen; select (1214) the first notification and the second notification in response to determining that the overlapping portion is greater than a threshold; and
dismiss (1106) both the first notification and the second notification in response to detecting a dismissal gesture.

7. The computer-readable storage medium of claim 6, wherein the instructions that upon execution cause the processor to select the first notification and the second notification further comprise instructions that cause the processor to:
align the second notification with the first notification in response to selecting the second notification.

8. The computer-readable storage medium of claim 6, wherein the instructions that upon execution cause the processor to dismiss both the first notification and the second notification further comprise instructions that cause the processor to:
dismiss both the first notification and the second notification in response to determining that the velocity of the first notification when touch input was removed from the touch-screen is greater than a velocity threshold.

9. The computer-readable storage medium of claim 6, wherein the instructions that upon execution cause the processor to dismiss both the first notification and the second notification further comprise instructions that cause the processor to:
dismiss both the first notification and the second notification in response to determining that a threshold amount of the first notification passed a boundary on the touch-screen and that the first touch input was removed from the touch-screen.

10. The computer-readable storage medium of claim 6, wherein the computer-readable storage medium further comprises instructions that upon execution cause the processor to:
return both the first notification to an initial position and the second notification to an initial position in response to determining that the dismissal gesture was not performed.

## Patentansprüche

1. Computervorrichtung (100), umfassend:
einen Prozessor (102);
einen Touchscreen (200); und
einen Speicher (110) in betriebsfähiger Kommunikation mit dem Prozessor und dem Touchscreen (200), wobei der Speicher (110) Anweisungen enthält, die beim Ausführen durch den Prozessor bewirken, dass der Prozessor Folgendes durchführt:
Anzeigen (1102) einer ersten Mitteilung an einer ersten Position des Touchscreens und einer zweiten Mitteilung an einer zweiten Position des Touchscreens;
Ändern (1210) einer Position der ersten Mitteilung auf der Grundlage einer vom Touchscreen erfassten Berührungseingabe, sodass diese mindestens einen Abschnitt der zweiten Mitteilung überlappt;
Auswählen (1210, 1214) der ersten Mitteilung und der zweiten Mitteilung auf der Grundlage einer erfassten Position einer ersten Berührungseingabe, nämlich als Reaktion auf das Bestimmen, dass eine Schwellenmenge der ersten Mitteilung über die zweite Mitteilung gelegt wurde; und
Ablehnen (1106) sowohl der ersten Mitteilung als auch der zweiten Mitteilung als Reaktion auf das Erkennen einer Ablehngeste.

2. Computervorrichtung (100) nach Anspruch 1, wobei der Speicher (110) ferner Anweisungen umfasst, die beim Ausführen bewirken, dass der Prozessor (102) Folgendes durchführt:
Modifizieren (1212) des Aussehens der ersten Mitteilung und der zweiten Mitteilung als Reaktion auf das Auswählen der ersten Mitteilung und der zweiten Mitteilung.

3. Computervorrichtung (100) nach Anspruch 1, wobei die Anweisungen, die beim Ausführen bewirken, dass der Prozessor (102) die erste Mitteilung und die zweite Mitteilung auswählt, ferner Anweisungen umfassen, die beim Ausführen bewirken, dass der Prozessor (102) Folgendes durchführt:
Ausrichten der zweiten Mitteilung an der ersten Mitteilung auf der Grundlage der erfassten Position der ersten Berührungseingabe.

4. Computervorrichtung (100) nach Anspruch 1, wobei der Speicher (110) ferner Anweisungen umfasst, die beim Ausführen bewirken, dass der Prozessor Folgendes durchführt:
Zurückführen sowohl der ersten Mitteilung in die erste Position als auch der zweiten Mitteilung in die zweite Position als Reaktion auf das Bestimmen, dass keine Ablehngeste durchgeführt wurde.

5. Computervorrichtung (100) nach Anspruch 1, wobei die Anweisungen, die beim Ausführen bewirken, dass der Prozessor (102) die erste Mitteilung und die zweite Mitteilung ablehnt, ferner Anweisungen umfassen, die beim Ausführen bewirken, dass der Prozessor (102) Folgendes durchführt:
Ablehnen (1222) sowohl der ersten Mitteilung als auch der zweiten Mitteilung als Reaktion auf das Bestimmen, dass die Geschwindigkeit der ersten Mitteilung beim Entfernen der ersten Berührungseingabe vom Touchscreen größer ist als ein Geschwindigkeitsschwellenwert.

6. Computerlesbares Speichermedium (110), enthaltend Anweisungen zum Ablehnen von auf einem Touchscreen angezeigten Mitteilungen, wobei das computerlesbare Speichermedium Anweisungen enthält, die beim Ausführen bewirken, dass ein Prozessor Folgendes durchführt:
Anzeigen (1102) einer ersten Mitteilung und einer zweiten Mitteilung auf dem Touchscreen;
Ändern (1210) einer Position der ersten Mitteilung auf der Grundlage einer vom Touchscreen erfassten Berührungseingabe, sodass diese mindestens einen Abschnitt der zweiten Mitteilung überlappt;
Auswählen (1214) der ersten Mitteilung und der zweiten Mitteilung als Reaktion auf das Bestimmen, dass der überlappende Abschnitt größer ist als ein Schwellenwert; und
Ablehnen (1106) sowohl der ersten Mitteilung als auch der zweiten Mitteilung als Reaktion auf das Erkennen einer Ablehngeste.

7. Computerlesbares Speichermedium nach Anspruch 6, wobei die Anweisungen, die beim Ausführen bewirken, dass der Prozessor die erste Mitteilung und die zweite Mitteilung auswählt, ferner Anweisungen umfassen, die bewirken, dass der Prozessor Folgendes durchführt:
Ausrichten der zweiten Mitteilung an der ersten Mitteilung als Reaktion auf das Auswählen der zweiten Mitteilung.

8. Computerlesbares Speichermedium nach Anspruch 6, wobei die Anweisungen, die beim Ausführen bewirken, dass der Prozessor sowohl die erste Mitteilung als auch die zweite Mitteilung ablehnt, ferner Anweisungen umfassen, die bewirken, dass der Prozessor Folgendes durchführt:
Ablehnen sowohl der ersten Mitteilung als auch der zweiten Mitteilung als Reaktion auf das Bestimmen, dass die Geschwindigkeit der ersten Mitteilung beim Entfernen der Berührungseingabe vom Touchscreen größer ist als ein Geschwindigkeitsschwellenwert.

9. Computerlesbares Speichermedium nach Anspruch 6, wobei die Anweisungen, die beim Ausführen bewirken, dass der Prozessor sowohl die erste Mitteilung als auch die zweite Mitteilung ablehnt, ferner Anweisungen umfassen, die bewirken, dass der Prozessor Folgendes durchführt:
Ablehnen sowohl der ersten Mitteilung als auch der zweiten Mitteilung als Reaktion auf das Bestimmen, dass eine Schwellenmenge der ersten Mitteilung eine Grenze auf dem Touchscreen überschritten hat und dass die erste Berührungseingabe vom Touchscreen entfernt wurde.

10. Computerlesbares Speichermedium nach Anspruch 6, wobei das computerlesbare Speichermedium ferner Anweisungen umfasst, die beim Ausführen bewirken, dass der Prozessor Folgendes durchführt:
Zurückführen sowohl der ersten Mitteilung in eine Anfangsposition als auch der zweiten Mitteilung in eine Anfangsposition als Reaktion auf das Bestimmen, dass keine Ablehngeste durchgeführt wurde.

## Revendications

1. Dispositif informatique (100), comprenant :
un processeur (102) ;
un écran tactile (200) ; et
une mémoire (110) en communication opérationnelle avec le processeur et l'écran tactile (200), la mémoire (110) incluant des instructions qui, lorsqu'elles sont exécutées par le processeur, amènent le processeur à :
afficher (1102) une première notification à une première position sur l'écran tactile et une seconde notification à une seconde position sur l'écran tactile ;
modifier (1210) une position de la première notification afin qu'elle chevauche au moins une partie de la seconde notification sur la base de l'entrée tactile détectée par l'écran tactile ;
sélectionner (1210, 1214) la première notification et la seconde notification sur la base d'une position détectée d'une première entrée tactile, à savoir, en réponse à une détermination selon laquelle une quantité de seuil de la première notification a été superposée à la seconde notification ; et
rejeter (1106) à la fois la première notification et la seconde notification, en réponse à la détection d'un geste de rejet.

2. Dispositif informatique (100) selon la revendication 1, dans lequel la mémoire (110) comprend en outre des instructions qui, lorsqu'elles sont exécutées, amènent le processeur (102) à :
modifier (1212) l'aspect de la première notification et de la seconde notification, en réponse à la sélection de la première notification et de la seconde notification.

3. Dispositif informatique (100) selon la revendication 1, dans lequel les instructions qui, lorsqu'elles sont exécutées, amènent le processeur (102) à sélectionner la première notification et la seconde notification, comprennent en outre des instructions qui, lorsqu'elles sont exécutées, amènent le processeur (102) à :
aligner la seconde notification sur la première notification, sur la base de la position détectée de la première entrée tactile.

4. Dispositif informatique (100) selon la revendication 1, dans lequel la mémoire (110) comprend en outre des instructions qui, lorsqu'elles sont exécutées, amènent le processeur à :
ramener la première notification à la première position, et la seconde notification à la seconde position, en réponse à une détermination selon laquelle un geste de rejet n'a pas été mis en oeuvre.

5. Dispositif informatique (100) selon la revendication 1, dans lequel les instructions qui, lorsqu'elles sont exécutées, amènent le processeur (102) à rejeter à la fois la première notification et la seconde notification comprennent en outre des instructions qui, lorsqu'elles sont exécutées, amènent le processeur (102) à :
rejeter (1222) à la fois la première notification et la seconde notification, en réponse à une détermination selon laquelle la vitesse de la première notification, lorsque la première entrée tactile a été supprimée de l'écran tactile, est supérieure à un seuil de vitesse.

6. Support de stockage lisible par ordinateur (110) incluant des instructions pour rejeter des notifications affichées par un écran tactile, le support de stockage lisible par ordinateur incluant des instructions qui, lorsqu'elles sont exécutées, amènent un processeur à :
afficher (1102) une première notification et une seconde notification sur l'écran tactile ;
modifier (1210) une position de la première notification afin qu'elle chevauche au moins une partie de la seconde notification sur la base de l'entrée tactile détectée par l'écran tactile ;
sélectionner (1214) la première notification et la seconde notification en réponse à une détermination selon laquelle la partie en chevauchement est supérieure à un seuil ; et
rejeter (1106) à la fois la première notification et la seconde notification, en réponse à la détection d'un geste de rejet.

7. Support de stockage lisible par ordinateur selon la revendication 6, dans lequel les instructions qui, lorsqu'elles sont exécutées, amènent le processeur à sélectionner la première notification et la seconde notification comprennent en outre des instructions qui amènent le processeur à :
aligner la seconde notification sur la première notification en réponse à la sélection de la seconde notification.

8. Support de stockage lisible par ordinateur selon la revendication 6, dans lequel les instructions qui, lorsqu'elles sont exécutées, amènent le processeur à rejeter à la fois la première notification et la seconde notification comprennent en outre des instructions qui amènent le processeur à :
rejeter à la fois la première notification et la seconde notification, en réponse à une détermination selon laquelle la vitesse de la première notification, lorsque l'entrée tactile a été supprimée de l'écran tactile, est supérieure à un seuil de vitesse.

9. Support de stockage lisible par ordinateur selon la revendication 6, dans lequel les instructions qui, lorsqu'elles sont exécutées, amènent le processeur à rejeter à la fois la première notification et la seconde notification comprennent en outre des instructions qui amènent le processeur à :
rejeter à la fois la première notification et la seconde notification, en réponse à une détermination selon laquelle une quantité de seuil de la première notification a franchi une limite sur l'écran tactile, et selon laquelle la première entrée tactile a été supprimée de l'écran tactile.

10. Support de stockage lisible par ordinateur selon la revendication 6, dans lequel le support de stockage lisible par ordinateur comprend en outre des instructions qui, lorsqu'elles sont exécutées, amènent le processeur à :
ramener à la fois la première notification à une position initiale, et la seconde notification à une position initiale, en réponse à une détermination selon laquelle le geste de rejet n'a pas été mis en oeuvre.
